# EUROPEAN PATENT SPECIFICATION

(11) **EP 0 731 154 B1**
(45) Date of publication and mention of the grant of the patent: **01.09.1999**
(21) Application number: 96301385.9
(22) Date of filing: 29.02.1996
(51) Int. Cl.: C09K 11/65

(54) **Fluorescent substance and manufacturing method thereof**
Fluoreszente Substanz und Verfahren zur Herstellung derselben
Substance fluorescente et procédé pour sa fabrication

(30) Priority: 08.03.1995 JP 4822595
(43) Date of publication of application: 11.09.1996
(73) Proprietor: RESEARCH DEVELOPMENT CORPORATION OF JAPAN, Kawaguchi-shi, Saitama-ken (JP); Toso Company, Ltd., Yamaguchi-ken (JP)
(72) Inventor: Yamada, Nobusuke, Tuchiura-shi, Ibaraki-ken (JP); Sano, Masahito, Tsukuba-shi, Ibaraki-ken (JP)
(74) Representative: Woods, Geoffrey Corlett

(56) References cited:
- EP-A- 0 104 846
- EP-A- 0 312 383

## Description

This invention relates to a fluorescent substance which mainly comprises silicon and oxygen and which displays a luminous reaction when exposed to radiation having a wavelength of from 320 nm to 360 nm. The invention further relates to a manufacturing method of the fluorescent substance.

Fluorescent substances are widely applied as luminous substances in fluorescent lamps, cathode-ray tube displays in televisions, and other various uses. Such fluorescent substances exhibit phosphorescence, and are also used as fluorescent paints for display plates used in darkrooms and for watch faces.

Heavy metal elements, particularly rare earth elements, are used as raw materials for these fluorescent substances. Usually, chemical compounds of rare earth metals are dispersed in an adequate dispersion medium and painted over the surface of the object in question. The composition of the fluorescent substance is invariable, and contamination by additional transition metal elements must be avoided. Noble metal elements, especially rare earth elements, are usually used as fluorescent substances. However, these heavy metal elements are environmentally harmful and large amounts of them cannot be disposed unless by-products from the manufacturing process are treated. Because the separation and extraction of rare earth elements are technically hard, it is very difficult to produce a fluorescent substance economically.

In order to activate conventional fluorescent substances, ultra violet rays having a shorter wave length than 300 nm have been employed. However, because ultra violet radiation having a shorter wave length than 300 nm is harmful to the human body it must be shielded to prevent leakage. Also, ultra violet radiation of which the wave length is shorter than 200 nm has a tendency to be absorbed by air. It is therefore necessary to take complicated countermeasures such as to set up an excitation radiation source close to a fluorescent plate or to put all equipment in a vacuum system. Because a fluorescent system which has a longer fluorescent life time than a micro-second or a milli-second has a longer afterglows, it is difficult to distinguish the instant of changeover from the exposed state to the unexposed state. Accordingly, when the fluorescent substance is used as an indicating element, it causes problems such as blurring and fading of colour, and these problems place limitations on the application and usage of the substance.

Fluorescent substances have conventionally been manufactured in powder form. Before actual use, they must be solidified by various methods according to each respective application. Additional disadvantages caused by the solidification process are a reduction in fluorescent ability and pollution to the human body and the environment by contamination of impurities. Powder of a fluorescent substance is manufactured under high temperature conditions above 1000°C, and such a process wastes a lot of energy.

Thus, conventional fluorescent substances have many problems which are not only inherent but are also caused by the manufacturing process. The inventors have conducted intensive studies to solve these problems, and have accomplished the present invention.

Accordingly the present invention provides a fluorescent substance which comprises from 32 mol% to 35 mol% of silicon and from 68 mol% to 65 mol% of oxygen, with from 10 ppm to 1 wt% silicon carbide or silicon nitride. The invention also provides process for manufacturing a fluorescent substance as defined above, which process comprises the acid or base hydrolysis of silicon alkoxide in the presence of a carbon element to form a precursor, and heat-treating the said precursor at a temperature of 500°C to 900°C.

The fluorescent substance of this invention comprises silicon and oxygen and is essentially in the form of SiO₂ with silicon carbide or silicon nitride present as an activator. Conventional fluorescent substances are usually transition metal elements, alkali earth elements and other heavy metal elements and include rare earth elements as activators. In contrast the fluorescent substance of this invention does not include rare earth elements, as essential components. Preferably the content of rare earth elements, transition metal elements, alkali metal elements, alkaline earth metal elements and other heavy metal elements is 1ppm or less.

The fluorescent substance of this invention includes activator in the range of 10 ppm to 1 wt%. If the content of it is smaller than 10 ppm the effect of it is insufficient and if the content exceeds 1 wt% the product become opaque so as not to accomplish the objects of this invention.

The main component composed of silicon and oxygen is manufactured by hydrolysing silicon alkoxide using alkali or acid catalyst. Tetra-methoxy silane or tetra-ethoxy-silane is preferably used as the silicon alkoxide, although the invention is not limited to these.

Silicon carbide, which acts as an activator in the substance of this invention, is added by a method which adds organic additives to starting materials. That is, the organic additives become graphite during the manufacturing process, react with silicon and form silicon carbide. Silicon nitride, which also acts as an activator, is generated by the reaction of the silicon with N₂ gas included in the atmosphere in which the raw materials of the fluorescent substance are baked, or by some other means during the manufacturing process.

As organic additives, water- or alcohol-soluble compounds which generate a graphite precursor by heating, are selected. Desirable organic additives include, for example, acenaphthylene or 2-methyl-1,2 naphthyl-ketone sulfonate, but this invention is not limited to them.

In the method of manufacturing the fluorescent substance, silicon alkoxide is diluted in alcohol and then water is added in a molar ratio to the silicon alkoxide of 2:1 or more. Organic additives to be added are first transformed to an alcohol and water soluble state, then dissolved in alcohol. The method of making the organic additives soluble in both alcohol and water is not limited, but the use of sulfonation is recommended. It is desirable to add to the solution a desiccate controlling agent which has a higher boiling point and lower surface tension than water, e.g. N,N-diethyl formamide. Especially, in the case of manufacturing a large shaped article, to add a desiccate controlling agent is more desirable. Then alkali or acid catalyser is added to the solution so as to advance a hydrolysis reaction and promote a transformation from the silica sol state to the silica gel state. After transformation to silica gel, alcohol and other solvents are volatilized by controlling the desiccating speed and consequently dry gel is obtained. Otherwise, after the hydrolysis reaction, the obtained silica sol is coated over the surface of a substrate by a spin coating method so as to form silica gel as a thin film.

The dry silica gel or thin film silica gel, obtained by the above mentioned method, is heat treated in an atmosphere of inert gas. Although there is no limitation regarding the rate at which temperature is increased, desirably 20°C/hr or less is recommendable. The maximum heat treatment temperature must be higher than the baking temperature of dried silica gel to keep the necessary tenacity and also must be lower than the dispersion temperature of added organic additives. The temperature is desirably between 500°C and 900°C and more desirably between 600°C and 800°C.

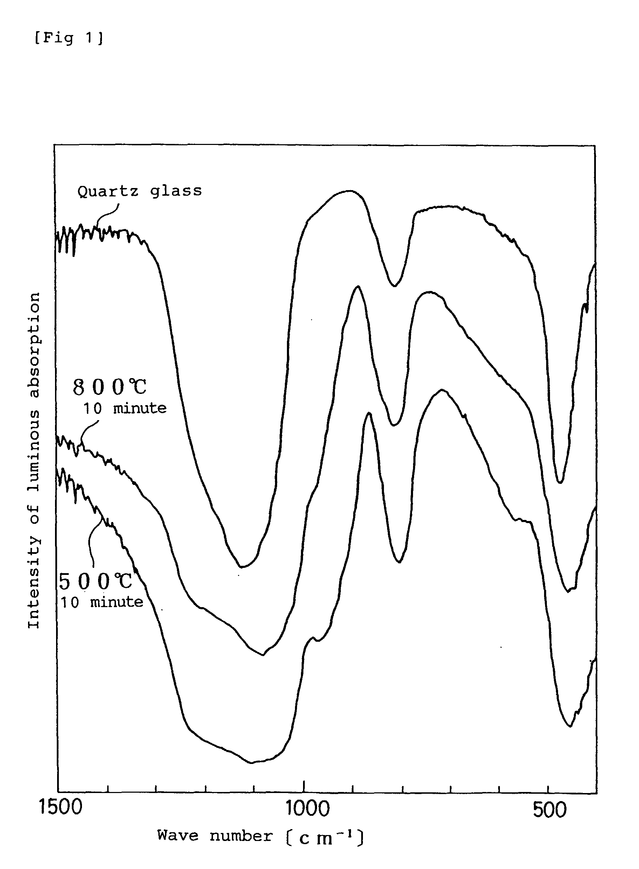

Results of infra red analysis of the obtained product are shown in figure 1. These results show that the obtained product has the same spectrum as SiO₂ (quartz glass), so it is clear that the main component of this fluorescent substance is the compound of silicon/oxygen in a molar ratio of 1:2. The content of carbon and nitrogen is determined by gas analysis, and it is recognized that the quantity of those two elements is bigger than 1 ppm but smaller than 1 wt%. The analytical results of micro atomic absorption show that the concentration of rare earth elements, alkali metal elements and other heavy metal elements do not exceed 1 ppm.

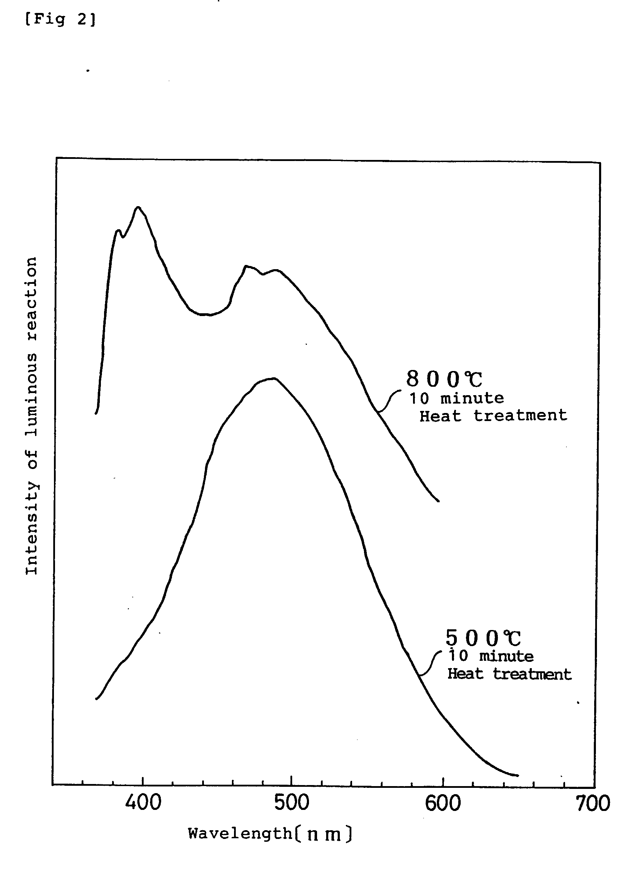

The fluorescent substance is analysed by a fluorescent analyser and a luminous reaction in the range from 320 nm to 400nm and from 460 nm to 600 nm is observed when the substance is exposed to radiation having a wavelength of from 320 nm to 400 nm, preferably 320 nm to 360 nm. One example of fluorescent analytical results for a fluorescent substance to which 500 ppm of acenaphthylene is added is shown in figure 2. In this case, the wave length of excitation radiation is 337 nm.

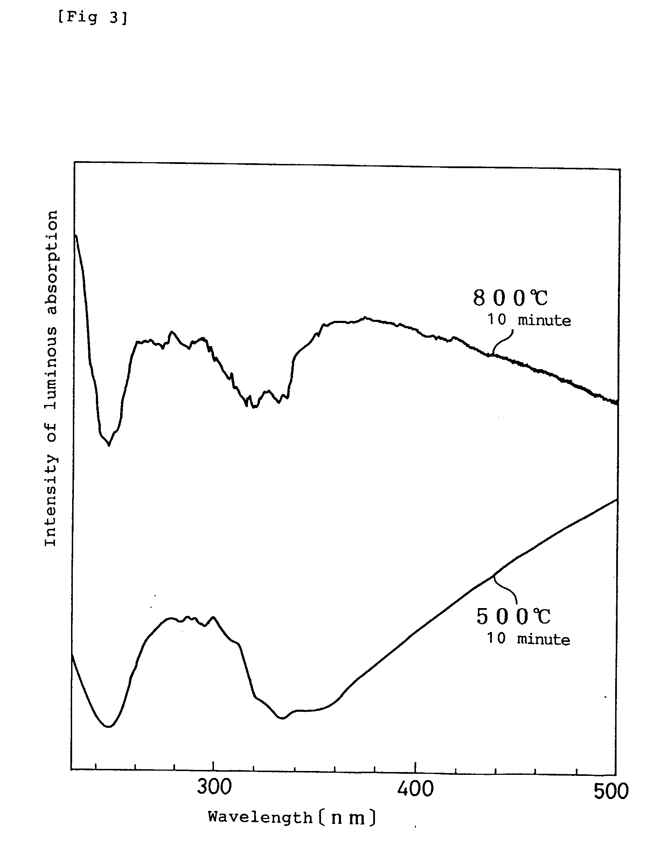

Luminous absorption of the new fluorescent substance in the range from visible to ultra violet wave lengths is measured by a visible/UV spectro chemical analyser, and an absorption band between 320 nm and 360 nm is observed. By measuring an exciting spectrum against the luminous reaction in the range from 380 nm to 400 nm and from 460 nm to 600 nm detected by a fluorescent spectrum analyser, the peak absorption is observed in the range of from 320 nm to 360 nm. Figure 3 shows an example of analytical data from luminous absorption to visible/UV wavelengths of a spectrum to which 500 ppm of acenaphthlene is added.

The life time of fluorescence in the range from 460 nm to 600 nm is 20 nano-seconds or less.

The fluorescent substance of the invention may be used, for instance, in a fluorescent lamp, a television cathode ray tube display or a fluorescent paint.

This invention is further illustrated in the following examples and in the accompanying figures, wherein:
Figure 1 is an IR spectrum of a fluorescent substance of this invention;
Figure 2 shows fluorescent analytical results for a fluorescent substance of this invention; and
Figure 3 is a visible/UV spectrum of a fluorescent substance of this invention.

### Example-1

76.11g of tetra-methoxy silane and 1.0g of methanol are poured into a 300 ml beaker, then 15.02g of 0.1wt% methanol solution of acenaphthlene is added as an organic activator. 36.55 g of N,N'-diethyl formamide is added as a desiccate controlling agent, and 88.25g of distilled water is added. This fluid is agitated for 2 hours by using a teflon coated stirrer. 1.85 g of 0.1N ammonia is added. After agitating again for a moment, the fluid is equally divided into six 120ml cylindrical poly-propylene containers. The containers are sealed up by aluminum foil and are left for two days at room temperature so as to advance a hydrolysis reaction of tetra methoxy silane and to become a gel. After the gelation of contents is checked, these poly-propylene containers are transferred into an incubator which is kept at 60°C. The contents are ripened for 24 hours, and then three holes of 1-2mm diameter are bored on aluminum foil cover to vaporize the solvent gradually and to desiccate the content. After storage in the incubator of 60°C for 20 days, the drying process is over and dried gel can be obtained.

The obtained gel is transferred into an electric furnace. After the atomosphere of the furnace is replaced by nitrogen gas, the temperature of the furnace is gradually raised under a small flow rate of nitrogen gas. The rising rate of the furnace temperature is 20°C/hour. When the furnace temperature become 700°C heating is stopped and kept at 700°C for 10 minutes, then cooled down to room temperature at a 150t/hour cooling rate. The fluorescent product is picked up from the furnace.

According to analytical results obtained by infra red spectrum analysis, it is clear that the main component of the obtained fluorescent substance is SiO₂. And by micro emission spectrochemical analysis, silicon, oxygen, carbon, nitrogen and a trace of calcium are detected. Other elements cannot be detected. By a visible/UV spectrum analysis, an absorption is observed at a wave length of from 320nm to 360nm. By using a spectro photo fluoro meter, fluorescence having a peak at 500nm against 337nm excitation radiation is observed. It is proved that the wave length of excitation radiation which activates fluorescence having a peak at 500nm is due to absorption in the range from 320nm to 360nm which is detected by a visible/UV spectrometer.

The life time of fluorescence having a peak at around 500nm is 10 nano-seconds or less.

As aforesaid, the new fluorescent substance relating to this invention is irradiated by excitation radiation in the range of from 320nm to 360nm wave length, and compared to the wave length of an excitation ray of conventional fluorescent substance it is considerably long. Consequently, this product is harmless to the human body. And, because the fluorescent life time of the product is shorter than 20 nano-seconds, it has the effect of reducing the blurring and fading of images when it is applied as an indicating element of TV tube or CRT display.

Furthermore, because the fluorescent substance of this invention is mainly composed of silicon and oxygen, and heavy metal elements especially rare earth elements are not necessary in its manufacturing process, it does not have the problem of contaminating the natural environment. In the manufacturing process, the products are treated in the sol or gel state and are not processed in the powder state. This eliminates any troublesome powder treatment process. Therefore, this invention allows a harmless and cheap fluorescent substance to be easily obtained.

## Claims

1. A fluorescent substance which comprises from 32mol% to 35mol% of silicon and from 68mol% to 65mol% of oxygen, with from 10ppm to 1wt% of silicon carbide or silicon nitride.

2. A substance according to claim 1 wherein the silicon and oxygen are in the form of SiO₂.

3. A substance according to claim 1 or 2 which has a content of rare earth elements, transition metal elements, alkali metal elements, alkali earth elements and other heavy metal elements of 1ppm or less.

4. A substance according to claim 1, 2 or 3 which displays a luminous reaction when exposed to radiation having a wavelength from 320nm to 360nm.

5. A substance according to any one of the preceding claims which has a fluorescent lifetime of 20 nanoseconds or less.

6. A process for manufacturing a fluorescent substance as defined in claim 1, which process comprises the acid or base hydrolysis of a silicon alkoxide in the presence of a carbon element to form a precursor, and heat treating the said precursor at a temperature of 500°C to 900°C.

7. Use of a fluorescent substance as claimed in any one of claims 1 to 5 in a fluorescent lamp, a television cathode ray tube display or a fluorescent paint.

## Patentansprüche

1. Fluoreszierende Substanz, die 32 Mol-% bis 35 Mol-% Silicium und 68 Mol-% bis 64 Mol-% Sauerstoff umfaßt, und mit 10 ppm bis 1 Gew.-% Siliciumcarbid oder Siliciumnitrid.

2. Substanz nach Anspruch 1 oder 2, dadurch gekennzeichnet, daß das Silicium und der Sauerstoff in Form von SiO₂ vorliegen.

3. Substanz nach Anspruch 1 oder 2, dadurch gekennzeichnet, daß sie einen Gehalt an Seltenerdmetallen, Übergangsmetallen, Alkalimetallen, Erdalkalimetallen und anderen Schwermetallen von 1 ppm oder weniger aufweist.

4. Substanz nach Anspruch 1, 2 oder 3, dadurch gekennzeichnet, daß sie eine Leuchtreaktion zeigt, wenn sie einer Strahlung mit einer Wellenlänge von 320 nm bis 360 nm ausgesetzt wird.

5. Substanz nach einem der vorhergehenden Ansprüche, dadurch gekennzeichnet, daß sie eine Fluoreszenz-Dauer von 20 Nanosekunden oder weniger besitzt.

6. Verfahren zur Herstellung einer fluoreszierenden Substanz nach Anspruch 1, dadurch gekennzeichnet, daß das Verfahren umfaßt die saure oder basische Hydrolyse eines Siliciumalkoxids in Gegenwart einer Kohlenstoff-Substanz unter Bildung eines Vorläufers, und Hitzebehandlung des Vorläufers bei einer Temperatur von 500 °C bis 900 °C.

7. Verwendung einer fluoreszierenden Substanz nach einem der Ansprüche 1 bis 5 in einer Fluoreszenzlampe, einer Fernsehbildröhre oder einer Fluoreszenzfarbe.

## Revendications

1. Substance fluorescente, qui comprend de 32 moles % à 35 moles % de silicium et de 68 moles % à 65 moles % d'oxygène, avec 10 ppm à 1 % en poids de carbure de silicium ou de nitrure de silicium.

2. Substance selon la revendication 1, dans laquelle le silicium et l'oxygène se présentent sous la forme de SiO₂.

3. Substance selon l'une des revendications 1 ou 2, qui a une teneur en éléments de terres rares, en éléments de métaux de transition, en éléments de métaux alcalins, en éléments alcalino-terreux et en autres éléments de métaux lourds égale ou inférieure à 1ppm.

4. Substance selon l'une des revendications 1, 2 ou 3, qui présente une réaction lumineuse lorsqu'elle est exposée à un rayonnement ayant une longueur d'onde de 320 nm à 360 nm.

5. Substance selon l'une des revendications précédentes, dont la durée de vie fluorescente est égale ou inférieure à 20 nanosecondes.

6. Procédé pour fabriquer une substance fluorescente selon la revendication 1, qui comprend l'hydrolyse acide ou basique d'un alcoxyde de silicium en la présence d'un élément de carbone pour former un précurseur, et le traitement thermique dudit précurseur à une température de 500°C à 900°C.

7. Utilisation d'une substance fluorescente selon l'une des revendications 1 à 5 dans une lampe fluorescente, un écran de télévision à tube à rayons cathodiques ou une peinture fluorescente.
